# EUROPEAN PATENT SPECIFICATION

(11) **EP 2 413 395 B1**
(45) Date of publication and mention of the grant of the patent: **14.03.2018**
(21) Application number: 11173574.2
(22) Date of filing: 12.07.2011
(51) Int. Cl.: H01M 2/00, H01M 10/04

(54) **Battery pack**
Batteriepack
Bloc-batteries

(30) Priority: 27.07.2010 US 368043 P; 19.01.2011 US 201113009770
(43) Date of publication of application: 01.02.2012
(73) Proprietor: Samsung SDI Co., Ltd., Gyeonggi-do (KR); Robert Bosch GmbH, 70442 Stuttgart (DE)
(72) Inventor: Kim, Yongsam, 446-711 Yongin-si (KR); Ahn, Byungkyu, 446-711 Yongin-si (KR)
(74) Representative: Gulde & Partner

(56) References cited:
- WO-A1-2008/018714
- WO-A2-2010/071370
- JP-A- H0 644 951
- JP-A- H07 326 332
- US-A1- 2009 311 593

## Description

### BACKGROUND

### 1. Field

Aspects of embodiments of the present invention relate to a battery pack.

### 2. Description of the Related Art

Secondary batteries are rechargeable, and thus, can be repeatedly used. Such a secondary battery may be manufactured as a battery pack including at least one battery cell.

The battery pack may be used in portable small devices such as cellular phones, notebooks, computers, cameras, and camcorders, or be used as a power source for driving a motor, e.g., of high output hybrid electric vehicles (HEV), electric vehicles (EV), and electric scooters.

As such, since the battery pack is installed on an external electronic device, the battery cell is required to have an insulation characteristic to prevent an undesirable short circuit between the battery cell and an external electronic device.
JP H07326332 and JP H064495 disclose a battery pack comprising a battery cell and a case housing the battery cell, the battery cell including an insulation member positioned on a side wall of the case and at least partially covering a rounded portion connected between an end wall and the side wall of the case.

### SUMMARY

According to the present invention, there is provided a battery with the features of claim 1. Further embodiments of the present invention are subject matter of the dependent claims or could be learned from the following description.

### BRIEF DESCRIPTION OF THE DRAWINGS

The above and other features and advantages will become more apparent to those of ordinary skill in the art by describing in detail some exemplary embodiments of the present invention with reference to the attached drawings. Moreover, additional aspects and/or advantages of embodiments of the present invention are set forth in the following description and accompanying drawings, or may be obvious in view thereof to those skilled in the art.
FIG. 1 is a perspective view illustrating a battery pack according to an embodiment of the present invention.
FIG. 2 is an exploded perspective view illustrating a battery cell and a frame of the battery pack of FIG. 1.
FIG. 3 is an exploded perspective view illustrating a battery cell and an insulation member of the battery pack of FIG. 1.
FIG. 4 is a partial cross-sectional view illustrating a lower portion of the battery pack of FIG. 1.
FIG. 5 is an enlarged partial cross-sectional view illustrating a case of a battery cell and an insulation member of the battery pack of FIG. 4.
FIG. 6 is a partial cross-sectional view illustrating an insulation member of a battery pack according to an embodiment of the present invention.
FIG. 7 is a partial cross-sectional view illustrating a lower portion of a battery pack according to another embodiment of the present invention.
FIG. 8 is an enlarged partial cross-sectional view illustrating a case of a battery cell and an insulation member of the battery pack of FIG. 7.
FIG. 9 is a partial cross-sectional view illustrating a lower portion of a battery pack according to another embodiment of the present invention.
FIG. 10 is an enlarged partial cross-sectional view illustrating a case of a battery cell and an insulation member of the battery pack of FIG. 9.

### DETAILED DESCRIPTION

Some exemplary embodiments of the present invention will now be described with reference to the accompanying drawings; however, embodiments of the present invention may be embodied in different forms and should not be construed as limited to the exemplary embodiments illustrated and set forth herein. Rather, these exemplary embodiments are provided by way of example for understanding of the invention and to convey the scope of the invention to those skilled in the art. As those skilled in the art would realize, the described embodiments may be modified in various different ways, all without departing from the scope of the present invention. Like reference numerals designate like elements throughout the specification and drawings.

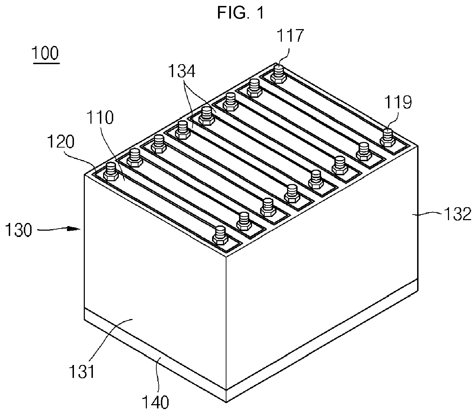

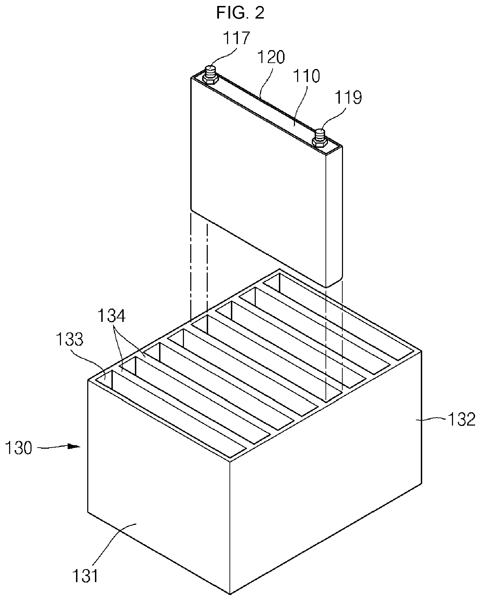

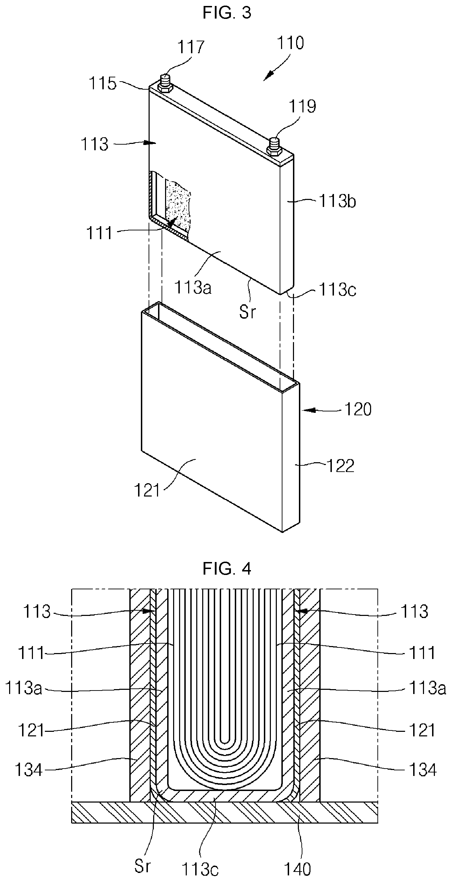

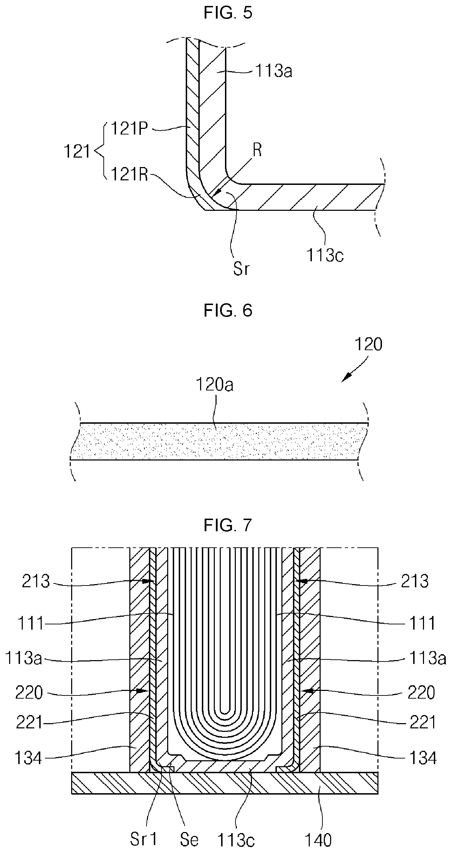

FIG. 1 is a perspective view illustrating a battery pack according to an embodiment of the present invention. FIG. 2 is an exploded perspective view illustrating a battery cell and a frame of the battery pack of FIG. 1. FIG. 3 is an exploded perspective view illustrating the battery cell and an insulation member of the battery pack of FIG. 1. FIG. 4 is a partial cross-sectional view illustrating a lower portion of the battery pack of FIG. 1. FIG. 5 is an enlarged partial cross-sectional view illustrating a case of the battery cell and an insulation member of the battery pack of FIG. 4. FIG. 6 is a partial cross-sectional view illustrating an insulation member of a battery pack according to an embodiment of the present invention.

Referring to FIGS. 1 through 6, a battery pack 100 according to an embodiment of the present invention includes at least one battery cell 110, an insulation member 120, a frame 130, and a cooling plate 140.

The battery cell 110, in one embodiment, includes an electrode assembly 111 including a positive electrode plate and a negative electrode plate with a separator therebetween, a case 113 having a space accommodating the electrode assembly 111 and electrolyte, a cap assembly 115 coupled to the case 113 and sealing the case 113, a positive electrode terminal 117 electrically connected to the positive electrode plate and protruding out of the cap assembly 115, and a negative electrode terminal 119 electrically connected to the negative electrode plate and protruding out of the cap assembly 115. The case 113 may have an open upper portion to receive the electrode assembly 111, and include a pair of first side surfaces 113a, a pair of second side surfaces 113b, and a lower surface 113c. The first side surfaces 113a may be long side surfaces having a large width, and the second side surfaces 113b may be short side surfaces connected between the first side surfaces 113a and having a width smaller than the width of the first side surfaces 113a. The lower surface 113c may be connected to the first and second side surfaces 113a and 113b. The case 113 may be formed by performing a deep drawing operation on a metal plate, and a round part Sr protruding outward at connections between the first and second side surfaces 113a and 113b and the lower surface 113c may be formed while forming the case 113.

The battery cell 110 may be connected to an external electronic device to perform a discharging operation for supplying power, or may perform a charging operation for receiving power from an external electronic device.

The insulation member 120, in one embodiment, surrounds side surfaces of the battery cell 110, that is, the first and second side surfaces 113a and 113b of the case 113. For example, the insulation member 120 may have a single body tube shape to continuously surround the first and second side surfaces 113a and 113b of the case 113. That is, the insulation member 120 may be formed as a single seamless part and having a hollow elongated shape. The insulation member 120 extends such that the insulation member 120 covers at least a portion of the round part Sr of the case 113 and does not cover the lower surface 113c. Accordingly, in one embodiment, a lower end of the insulation member 120 is disposed between a start portion and an end portion of the round part Sr. The start portion of the round part Sr is a portion where the first and second side surfaces 113a and 113b meet, or connect with, the round part Sr, and the end portion of the round part Sr is a portion where the lower surface 113c meets, or connects with, the round part Sr. In addition, in one embodiment, the lower end of the insulation member 120 and the lower surface 113c are disposed in the same plane.

The insulation member 120 prevents or substantially prevents an undesirable short circuit that may be formed between the battery cell 110 and an external electronic device. When the battery cell 110 is inserted in a space 133 of the frame 130, the insulation member 120 prevents or substantially prevents an end of the insulation member 120 from being caught by a partition wall 134, and allows heat generated from the battery cell 110 to be emitted through the lower surface 113c of the case 113.

In one embodiment, the insulation member 120 includes a first insulation side surface 121 and a second insulation side surface 122. The first insulation side surface 121 may be a long side surface that corresponds to the first side surface 113a and extends to the round part Sr, and the second insulation side surface 122 may be a short side surface that corresponds to the second side surface 113b and extends to the round part Sr. The insulation member 120 accommodating the battery cell 110 may be closely adhered to the battery cell 110 through a heating process. In one embodiment, in the heating process, heat is applied to the second side surface 113b and the round part Sr. This is because the first insulation side surface 121 may be uneven if heat is applied to the first side surface 113a, by way of example. In a case where the first insulation side surface 121 is uneven, when the battery cell 110 is inserted in the space 133 of the frame 130, the first insulation side surface 121 closely adhered to the first side surface 113a unevenly contacts the partition wall 134 of the frame 130, and a heat emission efficiency of the battery cell 110 through the frame 130 may be degraded.

A close adhesion between the insulation member 120 and the case 113 will now be described with respect to the first insulation side surface 121 and the first side surface 113a. Since a close adhesion between the second insulation side surface 122 and the second side surface 113b is the same as that between the first insulation side surface 121 and the first side surface 113a, a description thereof will be omitted.

Referring to FIGS. 4 and 5, the first insulation side surface 121 is closely adhered to the first side surface 113a such that the lower end of the first insulation side surface 121 is disposed at the round part Sr. In one embodiment, the first insulation side surface 121 includes a first insulation planar part 121P closely adhered to the first side surface 113a, and a first insulation round part 121R closely adhered to the round part Sr. The round part Sr, in one embodiment, has a radius of curvature R ranging from about 1 mm to about 8 mm. When the radius of curvature R of the round part Sr is less than 1 mm, a space for forming the first insulation round part 121R is reduced, and it is difficult to dispose the first insulation round part 121R at the lower surface 113c of the case 113. In this case, when the battery cell 110 is inserted in the space 133 of the frame 130, the end of the first insulation side surface 121 comes closer to the partition wall 134, and thus, is more easily caught by the partition wall 134. When the radius of curvature R of the round part Sr is greater than 8 mm, a dead space formed between the electrode assembly 111 and the case 113 in the inner space of the case 113 is increased.

The insulation member 120 may be formed of an electrically insulative heat shrinkage material, for example, at least one of polycarbonate (PC), polypropylene (PP), polyethylene (PE), and polyethyeleneterepthalate (PET). In one embodiment, as illustrated in FIG. 6, the insulation member 120 may be formed by adding a material having heat conductivity, such as ceramic particles 120a, to at least one of polycarbonate (PC), polypropylene (PP), polyethylene (PE), and polyethyeleneterepthalate (PET) to easily emit heat from the battery cell 110.

In one embodiment, the insulation member 120 may have a thickness ranging from about 0.05 mm to about 0.3 mm. The insulation member 120 having a thickness of less than 0.05 mm is difficult to form through an injection process, and the insulation member 120 having a thickness greater than 0.3 mm increases the entire thickness of the battery pack 100.

The frame 130, in one embodiment, includes a pair of first support plates 131, a pair of second support plates 132 connecting the first support plates 131, and one or more of the partition walls 134 for forming the space 133 in which the battery cell 110 is inserted. The partition walls 134 may be parallel or substantially parallel to the first support plates 131. The frame 130, in one embodiment, is formed of a metal such as aluminum, and emits heat generated from the battery cell 110 to the outside.

The cooling plate 140, in one embodiment, is coupled to and contacts a lower portion of the frame 130. Further, in one embodiment, the cooling plate 140 contacts a lower portion of the battery cell 110 inserted in the space 133 of the frame 130, for example, the lower surface 113c of the case 113. The cooling plate 140, in one embodiment, accommodates a cooling water passage and is formed of a metal, so that the cooling water can remove heat generated from the battery cell 110 or heat transferred through the frame 130 from the battery cell 110. Although not shown, the cooling plate 140 may be connected to a cooling water supply device for supplying cooling water.

As described above, since the battery pack 100 includes the insulation member 120 with an end disposed at the round part Sr of the case 113, the insulation member 120 is prevented or substantially prevented from being caught and damaged by the partition wall 134 when the battery cell 110 is inserted in the space 133 of the frame 130.

Thus, the battery pack 100 ensures an insulation characteristic of the battery cell 110 to prevent or substantially prevent an undesirable short circuit between the battery cell 110 and an external electronic device.

A battery pack according to another embodiment of the present invention will now be described.

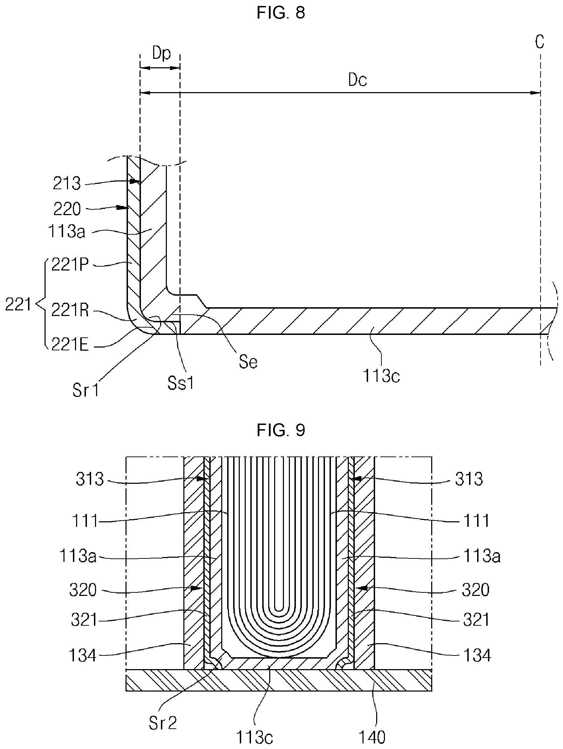

FIG. 7 is a partial cross-sectional view illustrating a lower portion of a battery pack according to another embodiment of the present invention, the partial cross-section view corresponding to that of FIG. 4. FIG. 8 is an enlarged partial cross-sectional view illustrating a case of a battery cell and an insulation member of the battery pack of FIG. 7.

The battery pack according to the embodiment of FIGS. 7 and 8 is the same in configuration and function as the battery pack 100 of FIG. 1 except for a case 213 and an insulation member 220. Thus, an illustration and a description of the same configuration will be omitted, and the case 213 and the insulation member 220 will be principally described.

Referring to FIGS. 7 and 8, the case 213 is similar to the case 113 described above and illustrated in FIGS. 3 and 4. However, the case 213 includes an extension part Se as well as a round part Sr1 protruding outward between the lower surface 113c and the first and second side surfaces 113a and 113b. The extension part Se extends in parallel or substantially in parallel to the lower surface 113c of the case 213 from the round part Sr1, and is disposed at a higher position than the lower surface 113c of the case 213. Accordingly, a receiving space Ss1, or accommodation space, is formed between the first side surface 113a and the lower surface 113c of the case 213 to receive the insulation member 220 at the outside of the extension part Se. A distance Dp between the first side surface 113a and the lower surface 113c may be equal to or less than 10% of a distance Dc between a central axis C and the first side surface 113a of the case 213. This is because heat generated from the battery cell 110 that is being emitted through the lower surface 113c of the case 213 may be reduced if the distance Dp is greater than 10% of the distance Dc.

In one embodiment, the insulation member 220 has a first insulation side surface 221 and a second insulation side surface (not shown), which are similar to the first and second insulation side surfaces 121 and 122 described above and illustrated in FIGS. 3 and 4. However, the first insulation side surface 221 may be a long side surface that corresponds to the first side surface 113a and passes by the round part Sr and extends to the accommodation space Ss1, and the second insulation side surface (not shown) may be a short side surface that corresponds to the second side surface 113b (refer to FIG. 3) and passes by the round part Sr and extends to the accommodation space Ss1. Hereinafter, among the first insulation side surface 221 and the second insulation side surface (not shown), the first insulation side surface 221 will now be described in further detail, by way of example.

The first insulation side surface 221 has a lower end that is disposed in the accommodation space Ss1 of the case 213. In one embodiment, the first insulation side surface 221 includes a first insulation planar part 221P closely adhered to the first side surface 113a, a first insulation round part 221R closely adhered to the round part Sr1, and a first insulation extension part 221E accommodated in the accommodation space Ss1.

Since the second insulation side surface (not shown) may be the same as the first insulation side surface 221 except for its width, a description thereof will be omitted.

As described above, since the insulation member 220 of the battery pack according to the embodiment shown in FIGS. 7 and 8 is accommodated in the accommodation space Ss1 of the case 213 such that the insulation member 220 is stably disposed at the lower side of the case 213, the end of the insulation member 220 is effectively prevented or substantially prevented from being caught and damaged by the partition wall 134 when the battery cell 110 is inserted in the space 133 of the frame 130, and heat generated from the battery cell 110 is emitted through the lower surface 113c of the case 213.

Thus, the battery pack described above according to an embodiment of the present invention effectively ensures an insulation characteristic of the battery cell 110 to prevent or substantially prevent an undesirable short circuit between the battery cell 110 and an external electronic device.

A battery pack according to another embodiment of the present invention will now be described.

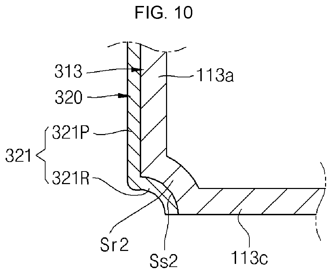

FIG. 9 is a partial cross-sectional view illustrating a lower portion of a battery pack according to another embodiment of the present invention, the partial cross-sectional view corresponding to that of FIG. 4. FIG. 10 is an enlarged partial cross-sectional view illustrating a case of a battery cell and an insulation member of the battery pack of FIG. 9.

The battery pack according to the embodiment of FIGS. 9 and 10 is the same in configuration and function as the battery pack 100 of FIG. 1 except for a case 313 and an insulation member 320. Thus, an illustration and a description of the same configuration will be omitted, and the case 313 and the insulation member 320 will be principally described.

Referring to FIGS. 9 and 10, the case 313 is similar to the case 113 described above and illustrated in FIGS. 3 and 4. However, the case 313 includes a round part Sr2 between the lower surface 113c and each of the first and second side surfaces 113a and 113b, and the round part Sr2 protrudes to the inside of the case 313. Accordingly, an accommodation space Ss2, which accommodates the insulation member 320 at the outside of the round part Sr2 between the lower surface 113c and each of the first and second side surfaces 113a and 113b is formed.

In detail, the insulation member 320 has a first insulation side surface 321 and a second insulation side surface (not shown), which are similar to the first and second insulation side surfaces 121 and 122 described above and illustrated in FIGS. 3 and 4. However, the first insulation side surface 321 may be a long side surface that corresponds to the first side surface 113a and extends to be accommodated in the accommodation space Ss2, and the second insulation side surface (not shown) may be a short side surface that corresponds to the second side surface 113b (refer to FIG. 3) and extends to be accommodated in the accommodation space Ss2. Hereinafter, among the first insulation side surface 321 and the second insulation side surface (not shown), the first insulation side surface 321 will now be described in further detail, by way of example.

The first insulation side surface 321 has a lower end that is disposed in the accommodation space Ss2. In one embodiment, the first insulation side surface 321 includes a first insulation planar part 321P closely adhered to the first side surface 113a, and a first insulation round part 321R accommodated in the accommodation space Ss2.

Since the second insulation side surface (not shown) may be the same as the first insulation side surface 321 except for its width, a description thereof will be omitted.

As described above, since the insulation member 320 of the battery pack according to the embodiment of FIGS. 9 and 10 is accommodated in the accommodation space Ss2 of the case 313 such that the insulation member 320 is stably disposed at the lower side of the case 313, the end of the insulation member 320 is effectively prevented or substantially prevented from being caught and damaged by the partition wall 134 when the battery cell 110 is inserted in the space 133 of the frame 130, and heat generated from the battery cell 110 is emitted through the lower surface 113c of the case 313.

Thus, the battery pack described above according to an embodiment of the present invention effectively ensures an insulation characteristic of the battery cell 110 to prevent or substantially prevent an undesirable short circuit between the battery cell 110 and an external electronic device.

Some exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A battery pack (100) comprising:
a battery cell (110) comprising:
an electrode assembly (111); and
a case (113, 213, 313) accommodating the electrode assembly (111) therein and comprising an end wall (113c) at a first end, a side wall (113a, 113b) connected to the end wall (113c) and extending toward a second end opposite the first end, and a rounded portion (Sr) connected between the end wall (113c) and the side wall (113a, 113b); and
an insulation member (120, 220, 320) on the side wall (113a, 113b) of the case (113, 213, 313) and at least partially covering the rounded portion (Sr), wherein an outer surface at the end of the insulation member (120) and an outer surface of the end wall (113c) are coplanar.

2. The battery pack (100) of claim 1, wherein the insulation member (120) comprises a first portion (121P) and a second portion (121R), the first portion (121P) being on the side wall (113a, 113b) of the case (113), and the second portion (121R) at least partially covering the rounded portion (Sr), an end of the second portion (121R) of the insulation member (120) being on the rounded portion (Sr).

3. The battery pack (100) of claim 1 or 2, wherein the first portion (121P) of the insulation member (120) comprises a planar portion, and the second portion (121R) of the insulation member (120) comprises a rounded portion.

4. The battery pack (100) of any one of the preceding claims, wherein the first (121P) and second (121R) portions of the insulation member (120) comprise a single integral member or separate portions.

5. The battery pack (100) of any one of the preceding claims, further comprising at least one partition wall (134) adjacent the battery cell (110).

6. The battery pack (100) of any one of the preceding claims, wherein the side wall (113a, 113b) of the case (113) comprises at least one first side wall (113a) and at least one second side wall (113b) connected to the at least one first side wall (113a), and wherein the insulation member (120, 220, 320) has a tubular shape and continuously surrounds the at least one first side wall (113a) and the at least one second side wall (113b).

7. The battery pack (100) of any one of the preceding claims, wherein the insulation member (120, 220, 320) has a thickness of about 0.05 mm to about 0.3 mm and/or wherein the rounded portion has a radius of curvature of about 1 mm to about 8 mm.

8. The battery pack (100) of any one of the preceding claims, wherein the rounded portion (Sr, Sr1) is formed to protrude toward an exterior of the case (113, 213) or wherein the rounded portion (Sr2) is formed to protrude toward an interior of the case (313).

9. The battery pack (100) of any one of the preceding claims, wherein the rounded portion (Sr) comprises a first rounded portion end directly connected to the side wall (113a, 113b) and a second rounded portion end directly connected to the end wall (113c), an outer surface of the second rounded portion end being coplanar with an outer surface of the end wall (113c).

10. The battery pack (100) of any one of the preceding claims, wherein the insulation member (120) is not on the end wall (113c).

11. The battery pack (100) of any one of claims 1, 5, 8, further comprising a cooling plate (140) contacting the end wall (113c) of the case (113, 213, 313).

12. The battery pack (100) of claim 11, wherein the insulation member (120) is formed to extend into a space (Ss1, Ss2) between the rounded portion (Sr) and the cooling plate (140).

13. The battery pack (100) of any one of claims 1, 5, 8, 10 to 12, wherein a distance (Dp) from an outer surface of the side wall (113a, 113b) to an end of the insulation member (220) at the first end is less than or equal to 10% of a distance (Dc) from the outer surface of the side wall (113a, 113b) to a central axis (C) of the case (220) extending between the first and second ends.

14. The battery pack (100) of any one of claims 1, 5, 8, 10 to 13, wherein the case (213) further comprises an extension portion (Se) connected between the rounded portion (Sr1) and the end wall (113c) and including an outer surface substantially parallel to and spaced apart from an outer surface of the end wall (113c), the insulation member (220) at least partially covering the extension portion (Se).

## Patentansprüche

1. Batteriepack (100) umfassend:
eine Batteriezelle (110) umfassend:
eine Elektrodenanordnung (111); und
ein Gehäuse (113, 213, 313), das die Elektrodenanordnung (111) in sich aufnimmt und eine Stirnwand (113c) an einem ersten Ende, eine Seitenwand (113a, 113b), die mit der Stirnwand (113c) verbunden ist und sich hin zu einem zweiten Ende gegenüber dem ersten Ende erstreckt, und einen abgerundeten Abschnitt (Sr), der zwischen der Stirnwand (113c) und der Seitenwand (113a, 113b) eingebunden ist, umfasst; und
ein Isolationselement (120, 220, 320) an der Seitenwand (113a, 113b) des Gehäuses (113, 213, 313), das den abgerundeten Abschnitt (Sr) zumindest teilweise bedeckt, wobei eine Außenfläche am Ende des Isolationselements (120) und eine Außenfläche der Stirnwand (113c) koplanar sind.

2. Batteriepack (100) nach Anspruch 1, wobei das Isolationselement (120) einen ersten Abschnitt (121P) und einen zweiten Abschnitt (121R) umfasst, wobei der erste Abschnitt (121P) auf der Seitenwand (113a, 113b) des Gehäuses (113) liegt und der zweite Abschnitt (121R) den abgerundeten Abschnitt (Sr) zumindest teilweise bedeckt, wobei ein Ende des zweiten Abschnitts (121R) des Isolationselements (120) auf dem abgerundeten Abschnitt (Sr) liegt.

3. Batteriepack (100) nach Anspruch 1 oder 2, wobei der erste Abschnitt (121P) des Isolationselements (120) einen planen Abschnitt umfasst und der zweite Abschnitt (121R) des Isolationselements (120) einen abgerundeten Abschnitt umfasst.

4. Batteriepack (100) nach einem der vorangehenden Ansprüche, wobei der erste (121P) und zweite (121R) Abschnitt des Isolationselements (120) ein einziges einstückiges Element oder separate Abschnitte umfassen.

5. Batteriepack (100) nach einem der vorangehenden Ansprüche, weiterhin umfassend mindestens eine Trennwand (134), die der Batteriezelle (110) benachbart ist.

6. Batteriepack (100) nach einem der vorangehenden Ansprüche, wobei die Seitenwand (113a, 113b) des Gehäuses (113) mindestens eine erste Seitenwand (113a) und mindestens eine zweite Seitenwand (113b) umfasst, die mit der mindestens einen ersten Seitenwand (113a) verbunden ist, und wobei das Isolationselement (120, 220, 320) eine Rohrform aufweist und die mindestens eine erste Seitenwand (113a) und die mindestens eine zweite Seitenwand (113b) durchgehend umgibt.

7. Batteriepack (100) nach einem der vorangehenden Ansprüche, wobei das Isolationselement (120, 220, 320) eine Dicke von ca. 0,05 mm bis ca. 0,3 mm aufweist und/oder wobei der abgerundete Abschnitt einen Krümmungsradius von ca. 1 mm bis ca. 8 mm aufweist.

8. Batteriepack (100) nach einem der vorangehenden Ansprüche, wobei der abgerundete Abschnitt (Sr, Sr1) so ausgebildet ist, dass er hin zu einer Umgebung des Gehäuses (113, 213) ragt oder wobei der abgerundete Abschnitt (Sr2) so ausgebildet ist, dass er hin zu einem Inneren des Gehäuses (313) ragt.

9. Batteriepack (100) nach einem der vorangehenden Ansprüche, wobei der abgerundete Abschnitt (Sr) ein erstes abgerundetes Abschnittsende, das direkt mit der Seitenwand (113a, 113b) verbunden ist, und ein zweites abgerundetes Abschnittsende, das direkt mit der Stirnwand (113c) verbunden ist, umfasst, wobei eine Außenfläche des zweiten abgerundeten Abschnittsendes mit einer Außenfläche der Stirnwand (113c) koplanar ist.

10. Batteriepack (100) nach einem der vorangehenden Ansprüche, wobei das Isolationselement (120) sich nicht an der Stirnwand (113c) befindet.

11. Batteriepack (100) nach einem der Ansprüche 1, 5, 8, weiterhin umfassend eine Kühlplatte (140), die mit der Stirnwand (113c) des Gehäuses (113, 213, 313) in Kontakt steht.

12. Batteriepack (100) nach Anspruch 11, wobei das Isolationselement (120) so ausgebildet ist, dass es sich in einen Raum (Ss1, Ss2) zwischen dem abgerundeten Abschnitt (Sr) und der Kühlplatte (140) hinein erstreckt.

13. Batteriepack (100) nach einem der Ansprüche 1, 5, 8, 10 bis 12, wobei ein Abstand (Dp) von einer Außenfläche der Seitenwand (113a, 113b) zu einem Ende des Isolationselements (220) am ersten Ende kleiner als oder gleich 10 % eines Abstands (Dc) von der Außenfläche der Seitenwand (113a, 113b) zu einer Mittelachse (C) des Gehäuses (220) ist, die sich zwischen dem ersten und zweiten Ende erstreckt.

14. Batteriepack (100) nach einem der Ansprüche 1, 5, 8, 10 bis 13, wobei das Gehäuse (213) weiterhin einen Verlängerungsabschnitt (Se) umfasst, der zwischen dem abgerundeten Abschnitt (Sr1) und der Stirnwand (113c) eingebunden ist und eine Außenfläche aufweist, die im Wesentlichen parallel und beabstandet zu einer Außenfläche der Stirnwand (113c) verläuft, wobei das Isolationselement (220) den Verlängerungsabschnitt (Se) zumindest teilweise bedeckt.

## Revendications

1. Bloc-batteries (100) comprenant :
un élément de batterie (110) comprenant :
un ensemble d'électrodes (111) ; et
un boîtier (113, 213, 313) logeant l'ensemble d'électrodes (111) à l'intérieur de ce dernier, et comprenant une paroi d'extrémité (113c) au niveau d'une première extrémité, une paroi latérale (113a, 113b) raccordée à la paroi d'extrémité (113c) et s'étendant vers une seconde extrémité opposée à la première extrémité, et une partie arrondie (Sr) raccordée entre la paroi d'extrémité (113c) et la paroi latérale (113a, 113b) ; et
un élément d'isolation (120, 220, 320) sur la paroi latérale (113a, 113b) du boîtier (113, 213, 313) et recouvrant au moins partiellement la partie arrondie (Sr), dans lequel une surface externe au niveau de l'extrémité de l'élément d'isolation (120) et une surface externe de la paroi d'extrémité (113c) sont coplanaires.

2. Bloc-batteries (100) selon la revendication 1, dans lequel l'élément d'isolation (120) comprend une première partie (121P) et une seconde partie (121R), la première partie (121P) étant sur la paroi latérale (113a, 113b) du boîtier (113), et la seconde partie (121R) couvrant au moins partiellement la partie arrondie (Sr), une extrémité de la seconde partie (121R) de l'élément d'isolation (120) étant sur la partie arrondie (Sr).

3. Bloc-batteries (100) selon la revendication 1 ou 2, dans lequel la première partie (121P) de l'élément d'isolation (120) comprend une partie planaire, et la seconde partie (121R) de l'élément d'isolation (120) comprend une partie arrondie.

4. Bloc-batteries (100) selon l'une quelconque des revendications précédentes, dans lequel les première (121P) et seconde (121R) parties de l'élément d'isolation (120) comprennent un seul élément solidaire ou des parties séparées.

5. Bloc-batteries (100) selon l'une quelconque des revendications précédentes, comprenant en outre au moins une paroi de séparation (134) adjacente à l'élément de batterie (110).

6. Bloc-batteries (100) selon l'une quelconque des revendications précédentes, dans lequel la paroi latérale (113a, 113b) du boîtier (113) comprend au moins une première paroi latérale (113a) et au moins une seconde paroi latérale (113b) raccordée à la au moins une première paroi latérale (113a), et dans lequel l'élément d'isolation (120, 220, 320) a une forme tubulaire et entoure, de manière continue, la au moins une première paroi latérale (113a) et la au moins une seconde paroi latérale (113b).

7. Bloc-batteries (100) selon l'une quelconque des revendications précédentes, dans lequel l'élément d'isolation (120, 220, 320) a une épaisseur d'environ 0,05 mm à environ 0,3 mm et/ou dans lequel la partie arrondie a un rayon de courbure d'environ 1 mm à environ 8 mm.

8. Bloc-batteries (100) selon l'une quelconque des revendications précédentes, dans lequel la partie arrondie (Sr, Sr1) est formée pour faire saillie vers un extérieur du boîtier (113, 213) ou dans lequel la partie arrondie (Sr2) est formée pour faire saillie vers un intérieur du boîtier (313).

9. Bloc-batteries (100) selon l'une quelconque des revendications précédentes, dans lequel la partie arrondie (Sr) comprend une première extrémité de partie arrondie directement raccordée à la paroi latérale (113a, 113b) et une seconde extrémité de partie arrondie directement raccordée à la paroi d'extrémité (113c), une surface externe de la seconde extrémité de partie arrondie étant coplanaire avec une surface externe de la paroi d'extrémité (113c).

10. Bloc-batteries (100) selon l'une quelconque des revendications précédentes, dans lequel l'élément d'isolation (120) n'est pas sur la paroi d'extrémité (113c).

11. Bloc-batteries (100) selon l'une quelconque des revendications 1, 5, 8, comprenant en outre une plaque de refroidissement (140) en contact avec la paroi d'extrémité (113c) du boîtier (113, 213, 313).

12. Bloc-batteries (100) selon la revendication 11, dans lequel l'élément d'isolation (120) est formé pour s'étendre dans un espace (Ss1, Ss2) entre la partie arrondie (Sr) et la plaque de refroidissement (140).

13. Bloc-batteries (100) selon l'une quelconque des revendications 1, 5, 8, 10 à 12, dans lequel une distance (Dp) d'une surface externe de la paroi latérale (113a, 113b) à une extrémité de l'élément d'isolation (220) au niveau de la première extrémité est inférieure ou égale à 10% d'une distance (De) de la surface externe de la paroi latérale (113a, 113b) à un axe central (C) du boîtier (220) s'étendant entre les première et seconde extrémités.

14. Bloc-batteries (100) selon l'une quelconque des revendications 1, 5, 8, 10 à 13, dans lequel le boîtier (213) comprend en outre une partie d'extension (Se) raccordée entre la partie arrondie (Sr1) et la paroi d'extrémité (113c) et comprenant une surface externe sensiblement parallèle à et espacée d'une surface externe de la paroi d'extrémité (113c), l'élément d'isolation (220) couvrant au moins partiellement la partie d'extension (Se).
